# EUROPÄISCHE PATENTANMELDUNG

(11) **EP 3 249 121 A1**
(43) Veröffentlichungstag der Anmeldung: **29.11.2017**
(21) Anmeldenummer: 16171398.7
(22) Anmeldetag: 25.05.2016
(51) Int. Cl.: E03C 1/04, F16K 3/24, F16K 3/26, F16K 11/07, F16L 37/46, E03C 1/02

(54) **VERSCHLUSSVORRICHTUNG**

(71) Anmelder: Applegarden GmbH, 2557 Studen (CH)
(72) Erfinder: Affentranger, Franz, 2557 Studen (CH)
(74) Vertreter: AMMANN PATENTANWÄLTE AG BERN

(57) **Zusammenfassung**

Eine Verschlussvorrichtung (1) für einen Auslauf für eine Flüssigkeit, namentlich Wasser, ist ausgebildet, um zwischen Auslauf und eine angeschlossene Leitung eingefügt zu werden. Die Verschlussvorrichtung (1) umfasst eine Zuflussbohrung (11) und eine Abflussbohrung (15), die voneinander getrennt sind. Im Wesentlichen radial nach aussen verlaufende Bohrungen (19, 21) in die Zulaufbohrung (11) und die Abflussbohrung (15) können durch eine Ausnehmung (25) in einem beweglichen Schieber (9) in fluidische Verbindung gebracht werden, um die Verschlussvorrichtung (1) in einen durchgängigen Zustand zu versetzen. Bevorzugt sind die Öffnungen der Eintrittsbohrungen (21) in den Abfluss (15) in der Stellung des Schiebers (9), in der die Verschlussvorrichtung gesperrt ist, offen, so dass im Auslauf und in der angeschlossenen Leitung vorhandenes Restwasser austreten kann.

## Beschreibung

Die vorliegende Erfindung betrifft eine Verschlussvorrichtung für einen an einen Wasseranschluss angeschlossenen Wasserauslauf gemäss Oberbegriff des Anspruchs 1.

Beweglich angebrachte Ausläufe in sanitären Einrichtungen wie zum Beispiel mit einem Schlauch an einer Armatur oder einem Wasseranschluss angebrachte Duschköpfe zeigen den Effekt, dass auch bei geschlossenem Zulauf Wasser nachlaufen kann, wenn der Auslauf (Duschkopf) bewegt wird. Nachlaufendes Wasser ist einerseits störend, zum anderen kann es auch zu Kalkflecken führen, da das auslaufende Wasser dazu neigt, Tropfen am Auslauf zu bilden, die nach Verdunsten Kalkflecken hinterlassen. Dieselben Effekte treten auch bei versehentlich nicht vollständig geschlossenen oder undichten Wasserhähnen auf.

Eine Aufgabe der vorliegenden Erfindung besteht darin, eine Vorrichtung zu schaffen, die ein einfaches und sicheres Verschliessen eines Wasserauslaufs gestattet. Eine zusätzlich bevorzugt zu lösende Aufgabe besteht darin, dass der Auslauf nach Verschliessen entleert wird.

Die Erfindung wird weiter an einem bevorzugten Ausführungsbeispiel unter Bezugnahme auf Figuren erläutert. Es zeigen:
- Figur 1: Isometrische Ansicht einer erfindungsgemässen Verschlussvorrichtung;
- Figur 2: Seitenansicht auf die Verschlussvorrichtung;
- Figur 3: Längsschnitt III-III, Zustand "unterbrochen";
- Figur 4: Schnitt wie Figur 3, Betriebszustand "durchgängig";
- Figur 5: Isometrische Ansicht des Schiebers;
- Figur 6: Isometrische Ansicht des zentralen Kupplungsteils.

Die Verschlussvorrichtung 1 (im Weiteren kurz: "Wasserstop") ist ausgebildet, um als Kupplung oder Adapter zwischen einem Wasseranschluss oder einer Armatur und der Leitung zu einem Auslauf wie einem Duschkopf eingefügt zu werden. Sie weist dazu am einlaufseitigen, ersten Anschluss 3 wie auch am auslaufseitigen, zweiten Anschluss 5 Vorkehrungen wie Gewinde oder Ähnliches auf entsprechend den lokal üblichen Anschlusstechniken (nicht dargestellt). Zentrale Bestandteile des Wasserstops 1 sind das Kupplungsteil 7 und das Steuerteil in Form eines auf dem Kupplungsteil 7 verschiebbaren, ringförmigen Schiebers 9, der frei drehbar auf dem Kupplungsteil 7 ist (s. Pfeil 10). Das Kupplungsteil 7 ist im Wesentlichen kreiszylindrisch. Es weist eine eingangsseitige, das heisst im ersten Anschluss 3, eine Zuflussbohrung 11 auf. Entsprechend befindet sich im auslaufseitigen Anschluss 5 eine Abflussbohrung 15. Zuflussbohrung 11 und Abflussbohrung 15 sind durch die Trennwand 17 voneinander getrennt. Über der Trennwand 17, das heisst in axialer Richtung nahe benachbart, verlaufen radiale Austrittsbohrungen 19 in die Zulaufbohrung 11 und entsprechend radiale Eintrittsbohrungen 21 in die Abflussbohrung 15. Anzahl und Grösse der radialen Bohrungen 19, 21 kann je nach Anforderungen an Durchflusskapazität usw. gewählt werden. Als Extremfall ist auch nur eine Bohrung denkbar, bevorzugt ist jedoch eine Mehrzahl von Bohrungen. Wie in der isometrischen Darstellung 6 deutlich wird, hat Anzahl und Grösse der radialen Bohrungen 19, 21 auch Einfluss auf die mechanische Stabilität des Kupplungsteils 7 in diesem Bereich. Eine hinreichende Wandstärke zwischen den radialen Bohrungen 19, 21 ist daher einzuhalten.

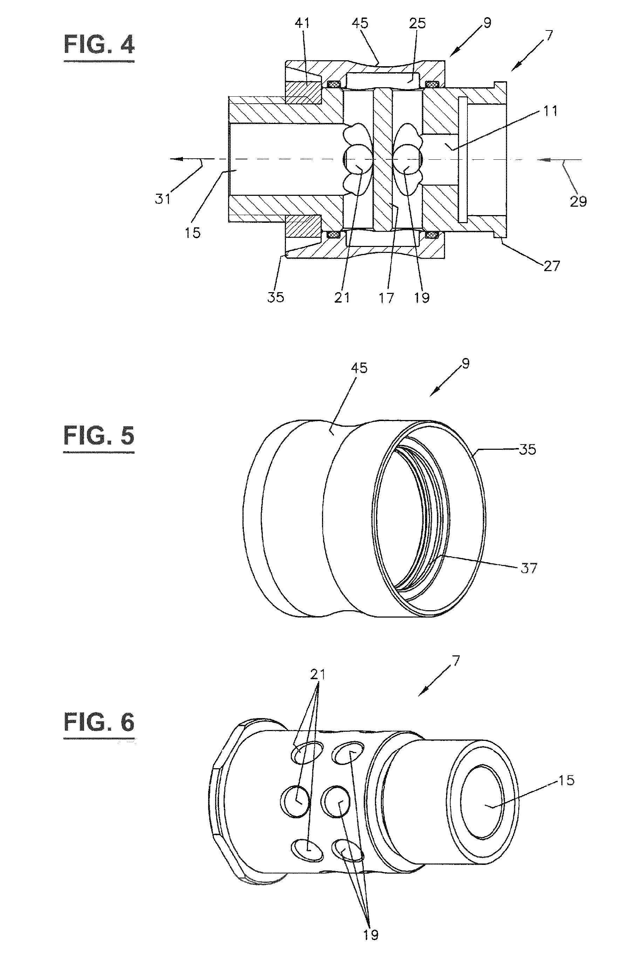

Der Schieber 9 umgibt das Kupplungsteil 7 in der Art eines Rings. Er weist im Inneren eine umlaufende Ausnehmung 25 auf. In der durchgängigen Stellung (siehe Figur 4) verbindet die Ausnehmung 25 in der Art eines Überströmkanals die radialen Bohrungen 19, 21 miteinander. In dieser Stellung kann also Wasser oder allgemein eine Flüssigkeit von der Zulaufbohrung 11 über die radialen Austrittsbohrungen 19, die Ausnehmung 25 und die radialen Eintrittsbohrungen 21 den Wasserstop über den Abflussanschluss 5 verlassen.

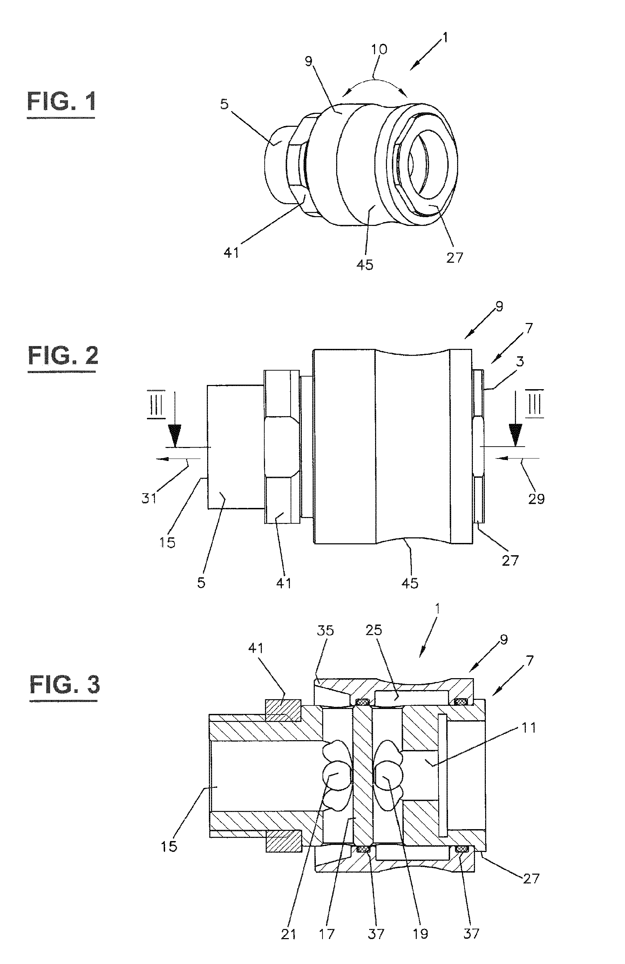

Figur 3 zeigt dagegen den Zustand des Wasserstops 1, in dem die Verbindung zwischen Zulfluss- 11 und Abflussbohrung 15 unterbrochen ist. Der Schieber ist an den Gesperrt-Anschlag 27 verschoben, so dass die Ausnehmung 25 nur noch in Verbindung mit den radialen Austrittsbohrungen 19 steht. Über den Öffnungen der Eintrittsbohrungen 21 befindet sich in diesem Zustand der Ablaufkragen 35. Wasser, das sich noch in den Leitungen, die mit dem Abfluss 15 verbunden sind, befindet, kann daher frei über die Eintrittsbohrungen 21 unter dem Kragen 35 austreten. Der Kragen 35 verhindert dabei auch, dass aus den radialen Bohrungen 21 das Wasser als störende Strahlen austritt.

Als Dichtung sind im Schieber 9 beidseits der Ausnehmung 25 O-Ringe 37 angeordnet.

Analog zum Gesperrt-Anschlag 27 befindet sich am auslaufseitigen Ende der Durchgangs-Anschlag 41, bis zu dem der Schieber 9 geschoben wird, um die durchgängige Betriebsstellung (siehe Figur 4) herzustellen. Hier ist der Anschlag 41 abnehmbar ausgebildet, um das Aufschieben des Schiebers 9 auf das Kupplungsteil 7 bei der Herstellung zu gestatten. Denkbar ist aber auch, den Gesperrt-Anschlag 27 zu diesem Zweck abnehmbar zu gestalten. Da im Beispiel das auslaufseitige Ende 5 ein Aussengewinde aufweist, kann dieses auch zur Befestigung des Durchgangsanschlags 41 verwendet werden.

Um den Schieber 9 besser bedienen zu können, weist er an der Aussenseite eine umlaufende, im Querschnitt konkave Griffmulde 45 auf.

Als Material für das Kupplungsteil 7 wie auch den Schieber 9 bieten sich unabhängig voneinander Metalle an, bevorzugt Aluminium, weiter bevorzugt eloxiertes Aluminium, oder Edelstahl. Denkbar sind auch Messing, verchromtes Messing und Kunststoff. Die Ausführung in eloxiertem Aluminium weist den Vorteil eines relativ geringen Gewichts auf, insbesondere gegenüber Stahl, und die eloxierte Oberfläche ist auch resistent gegen die Ausbildung von Kalkflecken.

Ein bevorzugtes Anwendungsgebiet der Verschlussvorrichtung wird, in privaten Haushalten, im Gastgewerbe und im Hotelwesen gesehen. Die Verschlussvorrichtung gestattet, insbesondere Duschen, das heisst mit einem Schlauch angeschlossene Duschköpfe, einerseits sicher zu verschliessen und andererseits die beweglichen Leitungen zu entleeren, so dass Nachtropfen beim Bewegen des Duschkopfes verhindert wird. Der erfindungsgemässe Wasserstop gestattet auch, bei einfachen Batterien das Duschen zu unterbrechen und den Wasserstrom wieder freizugeben, ohne dabei mühsam die Mischung neu einstellen zu müssen.

Aus dem vorangehend beschriebenen Ausführungsbeispiel sind dem Fachmann zahlreiche Abwandlungen und Ergänzungen zugänglich, ohne den Schutzbereich der Erfindung zu verlassen, der durch die Ansprüche gegeben ist. Denkbar sind unter anderem:
- Die Eintritts- und Austrittsbohrungen können auch in anderen, insbesondere voneinander verschiedenen Anordnung ausgeführt sein.
- Der Kupplungsteil weist einen anderen als kreisförmigen Querschnitt auf, zum Beispiel elliptisch oder prismatisch (sechseckig, achteckig, evtl. auch viereckig oder eine andere Eckenzahl). Andere als kreisförmige Querschnitte können jedoch Probleme bei der Abdichtung (O-Ringe) nach sich ziehen, unterbinden jedoch auch die freie Drehbarkeit des Schiebers 9, was je nachdem wünschenswert sein kann.

## Patentansprüche

1. Verschlussvorrichtung (1) für einen an einen Wasseranschluss angeschlossenen Wasserauslauf, insbesondere einen über eine bewegliche Leitung angeschlossenen Auslauf, **dadurch gekennzeichnet, dass** die Verschlussvorrichtung
- ein Kupplungsteil (7) umfasst, das zwischen Wasseranschluss und Auslauf einfügbar ist,
- einen ersten Zugang (11) und einen zweiten Zugang (15) aufweist, wobei die Zugänge im wesentlichen rohrförmig und in einer axialen Richtung aufeinander folgend ausgebildet und an den axial einander zugewandten Enden durch eine Trennwand (17) voneinander getrennt sind,
- oberhalb der Trennwand (17) je wenigstens ein in den ersten und zweiten Zugang mündender, eine Aussenöffnung in einer Aussenfläche des Kupplungsteils aufweisender Durchgang (11, 15) vorhanden ist,
- ein auf dem Kupplungsteil bewegliches Steuerteil (9) aufweist, das in wenigstens einer Stellung die Aussenöffnungen überlappt,
- das Steuerteil in einer dem Kupplungsteil zugewandten Innenfläche mindestens eine erste Ausnehmung (25) aufweist, die über den Aussenöffnungen als fluidische Verbindung platzierbar ist,
so dass durch Anordnen des Steuerteils über den Aussenöffnungen eine fluidische Verbindung zwischen den Zugängen herstellbar ist.

2. Verschlussvorrichtung (1) gemäss Anspruch 1, **dadurch gekennzeichnet, dass** das Steuerteil (9) zwischen zwei Endstellungen auf dem Kupplungsteil (7) bewegbar ist, Anschlagglieder (27, 41) vorhanden sind, durch die die Bewegung des Steuerteils in den Endstellungen begrenzt ist, wobei in der ersten Endstellung die fluidische Verbindung zwischen den Aussenöffnungen der Durchgänge besteht und die zweite Endstellung ein Verschlusszustand ist, in dem die Aussenöffnungen der in den ersten Zugang (11) mündenden Durchgängen (19) durch das Steuerteil verschlossen sind.

3. Verschlussvorrichtung (1) gemäss einem der Ansprüche 1 - 2, **dadurch gekennzeichnet, dass** die Durchgänge zum ersten Zugang (11) in einer anderen als der überlappenden Platzierung durch das Steuerteil (9) verschlossen sind.

4. Verschlussvorrichtung (1) gemäss einem der Ansprüche 1 -3, **dadurch gekennzeichnet, dass** das Steuerteil (9) in eine Auslaufstellung, die optional identisch mit der zweiten Endstellung ist, bringbar ist, in der die Durchgänge (21) des zweiten Zugangs (15) zur Umgebung offen sind, so dass Wasser über den zweiten Durchgang abfliessen kann.

5. Verschlussvorrichtung (1) gemäss Anspruch 4, **dadurch gekennzeichnet, dass** das Steuerteil (9) eine Leiteinrichtung (35) aufweist, die ausgebildet ist, in der Auslaufstellung aus den Durchgängen des zweiten Zugangs (15) austretende Flüssigkeit umzulenken, insbesondere in eine Richtung im wesentlichen in axialer Richtung.

6. Verschlussvorrichtung gemäss Anspruch 5, **dadurch gekennzeichnet, dass** die Leiteinrichtumg im wesentlichen eine in axialer Richtung und zum Kupplungsteil (7) offene, im Verschlusszustand in fluidischer Verbindung mit den Aussenöffnungen der Durchgänge des zweiten Zugangs (15) stehende zweite Ausnehmung ist.

7. Verschlussvorrichtung gemäss einem der Ansprüche 1 bis 6, **dadurch gekennzeichnet, dass** erste und zweite Durchgänge je 2 bis 12, bevorzugt 3, 4, 6, 8, oder 12 im wesentlichen radial verlaufende Bohrungen im Kupplungsteil sind.

8. Verschlussvorrichtung gemäss einem der Ansprüche 1 - 7, **dadurch gekennzeichnet, dass** das Kupplungsteil (7) im Querschnitt senkrecht zur axialen Richtung im wesentlichen eine kreisförmige Kontur hat, das Steuerteil (9) eine komplementär zu der Kontur ausgebildete Innenform hat, und der Radius der Kontur im vom Steuerteil abgedeckten Bereich konstant ist, so dass das Steuerteil auf dem Kupplungsteil axial verschiebbar ist.

9. Verschlussvorrichtung gemäss einem der Ansprüche 1 - 8, **dadurch gekennzeichnet, dass** dass die Aussenöffnungen der Durchgänge von erstem (11) und zweitem Durchgang (15) axial paarweise ausgerichtet sind, um eine kurze fluidische Verbindung zwischen ersten und zweiten Durchgängen zu erhalten.

10. Verschlussvorrichtung gemäss einem der Ansprüche 1 - 9, **dadurch gekennzeichnet, dass** genau eine erste Ausnehmung (25) vorhanden ist, durch die eine Verbindung aller Aussenöffnungen aller Durchgänge miteinander herstellbar ist.
